# EUROPÄISCHE PATENTANMELDUNG

(11) **EP 1 520 676 A1**
(43) Veröffentlichungstag der Anmeldung: **06.04.2005**
(21) Anmeldenummer: 04023266.2
(22) Anmeldetag: 30.09.2004
(51) Int. Cl.: B29C 45/14

(54) **Verfahren und Vorrichtung zur Herstellung eines Hybridbauteils, insbesondere für einen Querträger eines Fahrzeugs**

(30) Priorität: 02.10.2003 DE 10346181
(71) Anmelder: Behr GmbH & Co. KG, 70469 Stuttgart (DE)
(72) Erfinder: Neuss, Sabine, Dipl.-Ing., 48009 Birmingham, MI (US); Reddig, Thomas, Dipl.-Ing., 74321 Bietigheim-Bissingen (DE); Wolf, Walter, Dipl.-Ing., 71570 Oppenweiler-Zell (DE)

(57) **Zusammenfassung**

Erfindungsgemäß ist ein Verfahren zur Herstellung eines einen zumindest teilweise kunststoffbeschichteten Grundkörper (2) umfassenden Bauteils (1), insbesondere eines Hybridbauteils für einen Querträger eines Fahrzeugs, vorgesehen, bei dem der Grundkörper (2) in eine Spritzgussform (12) eingelegt und zumindest teilweise oder vollständig durch Schließen der Spritzgussform (12) vorgeformt sowie anschließend in einem einzigen Verfahrensschritt beim Kunststoffeinbringen mittels des Einspritzdrucks (p1) mit einer vorgegebenen Ausbildung druckgeformt wird.

**Bezugszeichenliste**

- 1: Bauteil
- 2: Grundkörper
- 2a, 2b: Elemente des Grundkörpers
- 5: Kunststoffschicht
- 6: Kanal
- 6a: Kabelkanal
- 8: Öffnung
- 10: Spritzgusswerkzeug
- 10a,10b: Oberwerkzeug, Unterwerkzeug
- 12: Spritzgussform
- 14: Werkzeugelement
- 16: Verstärkungselemente
- 18: Einspritzkanal
- 19: Anbauteil
- 20: Sicke
- 21: Füllraum
- 22: Füllöffnung
- 23: Ausnehmung
- 24: Sensor

- S, S2: Spalte
- p1: Einspritzdruck
- p2: Luftdruck
- R: Rand
- V: Vorrichtung
- A: Bereich

## Beschreibung

Die Erfindung bezieht sich auf ein Verfahren und eine Vorrichtung zur Herstellung eines einen zumindest teilweise kunststoffbeschichteten Grundkörper umfassenden Bauteils, insbesondere eines Hybridbauteils für einen Querträger eines Fahrzeugs. Des Weiteren betrifft die Erfindung die Verwendung eines derartig hergestellten Bauteils.

Aus dem Kraftfahrzeugbau sind aus Rohren gebildete Querträger bekannt, die aus Metall bestehen und entsprechend große Wandstärken aufweisen. Die Wandstärken sind dabei für eine ausreichende Form-, Biege-, Knick- und Torsionssteifigkeit sowie für eine ausreichende Druckbelastbarkeit entsprechend dick ausgeführt. Der als Rohr oder Hohlprofil ausgebildete Querträger eignet sich prinzipiell zur Luftführung beispielsweise von einer mittig im Frontbereich des Fahrzeugs angeordneten Klimaanlage zu den seitlichen Ausströmern hin.

Ein derartiger Querträger ist beispielsweise aus der DE 100 64 522 A1 bekannt. Dabei ist der Querträger zur Gewichtsreduzierung aus einem Leichtbauwerkstoff, insbesondere aus einem Leichtmetall in Art eines Schalenbauteils oder Grundkörpers gebildet, in welchen für eine hinreichende Steifigkeit und Druckbelastbarkeit des Querträgers ein zumindest einen Kanal bildender Kunststoffkern angeordnet ist. Zum Austritt des Luftstroms ist der Kanal mit Öffnungen versehen.

Üblicherweise wird ein bekanntes aus einem metallischen Grundkörper und einem Kunststoffkern gebildetes Bauteil in mehreren Umformstufen hergestellt. Dabei wird in einem ersten Schritt der metallische Grundkörper in einem Umformwerkzeug in eine Ursprungsform gebracht, anschließend wird in einem Spritzgusswerkzeug der Kunststoffkern eingebracht. Dies führt neben vielen Umformstufen zu einer aufwendigen Werkzeugtechnik.

Der Erfindung liegt die Aufgabe zugrunde, ein besonders einfaches und kostengünstiges Verfahren sowie eine besonders geeignete Vorrichtung zur Herstellung eines als Hybridbauteil ausgebildeten Bauteils anzugeben.

Die Aufgabe wird bezüglich des Verfahrens erfindungsgemäß gelöst durch die Merkmale des Anspruchs 1 und bezüglich der Vorrichtung durch die Merkmale des Anspruchs 18 sowie bezüglich Verwendungen eines derartig hergestellten Bauteils durch die Merkmale der Ansprüche 22 und 23.

Vorteilhafte Weiterbildungen der Erfindung sind Gegenstand der Unteransprüche.

Die Erfindung geht dabei von der Überlegung aus, dass bei der Herstellung eines Bauteils, wie eines Hybridbauteils für einen Querträger eines Fahrzeugs, mittels mehrerer Werkzeuge und einer Vielzahl von Verfahrensschritten an einen metallischen Grundkörper oder Blechteil Kunststoffelemente angeformt oder angespritzt oder der metallische Grundkörper wenigstens partiell mit Kunststoff umspritzt wird. Zur Reduzierung insbesondere der Anzahl der Werkzeuge, aber auch zur Reduzierung der Anzahl der Verfahrensschritte wird das Bauteil in vorteilhafter Weise lediglich mittels eines einzigen Werkzeugs, insbesondere eines Spritzgusswerkzeugs hergestellt. Dabei wird der Grundkörper in eine Spritzgussform eingelegt und zumindest teilweise oder vollständig durch Schließen der Spritzgussform vorgeformt sowie anschließend in einem einzigen Verfahrensschritt beim Kunststoffeinbringen mittels des Einspritzdrucks mit einer vorgegebenen Ausbildung druckgeformt. Dabei wird in einfacher Art und Weise beim Einlegen des Grundkörpers diejenige Stelle oder Position der Spritzgussform entsprechend zur Formung des Grundkörpers genutzt, welche als Hohlraum zum Einbringen des Kunststoffs vorgesehen ist. Ist der Hohlraum auf beiden Seiten des Grundkörpers, Ober- und Unterseite vorhanden, so formt sich der Grundkörper beim Kunststoffeinbringen mittels Einspritz- oder Fülldruck, an dieser Stelle um und passt sich der Kontur der Spritzgussform an. Dabei verformt sich der Grundkörper insbesondere von jener Seite weg, an welcher die eingebrachte Kunststoffschmelze zuerst fließt. Hierdurch ist sichergestellt, dass gezielt und durch entsprechende Abmessungen der Spritzgussform der Grundkörper selbst im Spritzgusswerkzeug vorgeformt, partiell geformt und druckgeformt werden kann.

Zweckmäßigerweise wird der Grundkörper in der Spritzgussform durch Einführen mindestens eines Form gebenden Werkzeugelements, wie z.B. eines Stempels, vorgeformt. Dies ermöglicht eine weitgehend genaue und hinreichend gute Vorformung oder Vorfertigung des Grundkörpers bereits im Spritzgusswerkzeug. Darüber hinaus ist hierdurch eine Vorfertigung mit wenigen Umformstufen erreicht. Vorzugsweise wird der Grundkörper in einer Nachdruckphase durch Eindrücken und/oder Durchdrücken der Spritzgussform in eine vorgegebene Endausbildung druckgeformt.

Für eine möglichst gute Tragstruktur und Tragkonstruktion des Bauteils wird der Grundkörper zweckmäßigerweise zumindest partiell vom Kunststoff beschichtet, insbesondere umspritzt. Vorzugsweise wird der Grundkörper innen- und/oder außenseitig mit Kunststoff versehen. Auch wird der Kunststoff bevorzugt ein- oder mehrschichtig aufgebracht. Für eine möglichst gute Biege-, Beul- sowie Torsionssteifigkeit des Bauteils wird der Kunststoff vorzugsweise formschlüssig und flächig aufgebracht. Die Kunststoffschicht bewirkt neben einer guten Struktursteifigkeit auch eine thermische Isolierung und/oder Schallisolierung bei einem als Kanal ausgebildeten Kunststoffkern, welcher von einem gasförmigen oder flüssigen Medium durchströmt wird. Zusätzlich kann eine der Kunststoffschichten mit einer Verstärkung, insbesondere mit einem Verstärkungsgewebe, z.B. Fasem, insbesondere einem Glasfasergewebe, versehen werden. Alternativ oder zusätzlich wird der Grundkörper mit einem Kunststoffkern, insbesondere mit einer Innenverrippung versehen. Je nach Art und Funktion des Bauteils wird der Kunststoff mit unterschiedlicher Dicke, insbesondere mit einer Dicke von 1 mm bis 8 mm, vorzugsweise 1,5 mm bis 3 mm aufgebracht. Bevorzugt wird der Kunststoff in einem an sich bekannten Mehrkomponenten-Spritzgußverfahren eingebracht.

Für eine möglichst einfache Handhabung des Bauteils beim Herstellungsprozess ist der Grundkörper vorzugsweise aus mehreren Elementen, insbesondere aus zwei Halbkörpern, z.B. aus zwei Halbschalen gebildet ist, die in der Spritzgussform vorgeformt werden. Zur Nutzung des Bauteils als Luftführungskanal oder zur Ausbildung des Bauteils als ein Hohlkörper werden die Elemente mechanisch, insbesondere durch Verstemmen oder über den angeformten, insbesondere angespritzten Kunststoffkern unter Bildung eines Kanals miteinander verbunden.

Vorzugsweise wird ein aus einem Leichtmetall, insbesondere Aluminium oder aus Feinstahl gebildeter Grundkörper mit einer Wanddicke von 0,4 mm bis 1,0 mm bis 1,5 mm verwendet wird. Ein derartiger metallischer Grundkörper oder ein Blechteil ist besonders kostengünstig und für einen auf Gewichtsreduzierung ausgelegten Leichtbau im Fahrzeugbau besonders geeignet. Je nach Art und Funktion des Bauteils kann der Grundkörper mit bereichsweise variierender Wanddicke geformt werden. Beispielsweise kann bei einer Verwendung des Bauteils als Querträger dieser im Bereich von Halterungen und Krafteinleitungsstellen im Fahrzeug, z.B. Anbindung an eine A-Säule, im Lenkungsbereich, Anbindung einer Klimaanlage oder bei Front-Ends in den Bereichen der Längsträger, der Motorlager oder des Haubenschlosses mit einer dickeren Wandstärke ausgebildet sein, als im Bereich, in dem das Bauteil lediglich als Luftführungskanal, als Montageträger oder für andere Funktionen dient.

In einer bevorzugten Ausführungsform wird der Grundkörper derart vorgeformt, dass ein Spalt zwischen der Form gebenden Seite der Spritzgussform und der Außenform oder Kontur des Grundkörpers gebildet ist. Zweckmäßigerweise wird die Größe des Spalts in Abhängigkeit von der Kunststoffdicke und dem Einspritzdruck vorgegeben. Dabei wird für eine möglichst gute Umformung durch den Einspritzdruck bei einem kleinen Spalt, z.B. bei einem Spalt von 1 mm, ein möglichst hoher Einspritzdruck von über 1000 bar, gewählt. Diese vorgegebene Einstellung von Spaltgröße und Einspritzdruck wird beim Druckumformen des Grundkörpers dahingehend dynamisch verändert, dass sich mit Einbringen des Kunststoffs der Spalt verkleinert und der Einspritzdruck erhöht, so dass bei einem besonders dünnwandigen Grundkörper nur ein geringer Umformdruck erforderlich ist und gleichzeitig eine weitgehend gute Kontur- und Formgenauigkeit erreicht wird. Die Umformung wird sowohl durch die Höhe des Einspritzdrucks als auch durch einen mit kleiner werdendem Spalt resultierenden Umformdruck beeinflusst.

Wird hingegen ein großer Spalt vorgegeben, so fließt die Kunststoffschmelze bevorzugt in den durch den großen Spalt gebildeten Hohlraum mit geringem Fließdruck. Erst durch Begrenzung des Hohlraums aufgrund der Wandung des Grundkörpers und zunehmender Auffüllung des Hohlraums wird der Hohlraum verengt, so dass ein erhöhter Gegendruck entsteht, der mit kleiner werdendem Hohlraum steigt, so dass der Grundkörper und dessen Wandung verformt wird. Beim großen Spalt wird somit die Umformung des Grundkörpers nur über den Umformdruck bewirkt und nicht über den Einspritzdruck. In einer bevorzugten Ausführungsform beträgt der Spalt mindestens 1 mm und höchstens 4 mm.

Die Vorrichtung zur Herstellung des Bauteils umfasst vorzugsweise ein Spritzgusswerkzeug mit einer Spritzgussform, in welche der Grundkörper anordenbar und zumindest teilweise oder vollständig durch Schließen der Spritzgussform vorformbar sowie anschließend in einem einzigen Verfahrensschritt beim Kunststoffeinbringen mittels des Einspritzdrucks mit einer vorgegebenen Ausbildung druckformbar ist. Dabei weist die Spritzgussform vorteilhafterweise eine die Kontur des Grundkörpers entsprechende Formgebende Seite, insbesondere Innenwand auf. Insbesondere ist die Spritzgussform für ein ein- oder beidseitiges Beschichten des Grundkörpers mit Kunststoff ausgebildet. Hierzu weist die Spritzgussform entsprechende Abmessungen auf, so dass ein- oder beidseitig des Grundkörpers nach dessen Vorformen mindestens ein Grundkörper vollständig oder partiell umlaufender Spalt gebildet ist, der zur Aufnahme des Kunststoffs vorgesehen ist.

Für eine möglichst flexible Vorformung des Grundkörpers ist das Spritzgusswerkzeug ein- oder mehrteilig ausgebildet. Insbesondere umfasst das Spritzgusswerkzeug ein Ober- und/oder ein Unterwerkzeug, wiederum bevorzugt ein- oder mehrteilig ausgebildet sind. Für eine Ausbildung des Grundkörpers mit einer Oberflächenstruktur in Form von verschiedenen Mustern, wie z.B. Rillen- oder Kreuzmuster, ist das Spritzgusswerkzeug, insbesondere das Ober- und/oder Unterwerkzeug mit mindestens einer Sicke versehen.

Bevorzugt wird ein nach dem oben beschriebenen Verfahren hergestelltes Bauteil als Instrumententafelträger in einem Fahrzeug verwendet, wobei der Kunststoffkern einen Kanal, insbesondere einen Luftführungskanal und/oder einen Kabelkanal bildet. Alternativ kann ein derart hergestelltes Bauteil als Träger oder Querträger in einem Fahrzeug, insbesondere als Querträger zwischen den A-Säulen eines Fahrzeugs verwendet werden.

Die mit der Erfindung erzielten Vorteile bestehen insbesondere darin, dass durch ein derart in einem einzigen Werkzeug komplett geformtes und einoder umspritztes Bauteil ein besonders einfaches und kostengünstiges Herstellungsverfahren gegeben ist, welches zudem mit einem besonders einfachen Werkzeug ausführbar ist. Auch ist die Anzahl der Verfahrensschritte und somit die Herstellungszeit eines Hybridbauteils deutlich reduziert.

Ausführungsbeispiele der Erfindung werden anhand einer Zeichnung näher erläutert. Darin zeigen:
- Figur 1A und 1B: schematisch ein Bauteil mit einem zumindest teilweise kunststoffbeschichteten Grundkörper,
- Figur 2A und 2B: schematisch die Verfahrensschritte zur Herstellung eines einen zumindest teilweise kunststoffbeschichteten Grundkörper umfassenden Bauteils in einer ein Spritzgusswerkzeug umfassenden Vorrichtung,
- Figur 3: schematisch einen vergrößerten Ausschnitt eines Spritzgusswerkzeugs zur Darstellung der Vorformung des Grundkörpers,
- Figur 4: schematisch den Ausschnitt aus Figur 3 zur Darstellung der mittels Druckumformung ausgeführten Formgebung des Grundkörpers,
- Figur 5: schematisch einen Teilbereich eines fertig gestellten Bauteils aus einem kunststoffbeschichteten Grundkörper,
- Figur 6: eine Darstellung des Druckumformprozesses des Grundkörpers,
- Figur 7: eine Darstellung des Druckumformprozesses des Grundkörpers im Bereich einer Kante des Spritzgusswerkzeugs,
- Figur 8A bis 8C: eine Darstellung eines Druckumformprozesses des Grundkörpers mit einem Spritzgusswerkzeug,
- Figur 9A, 9B: eine Darstellung eines Druckumformprozesses des Grundkörpers an einer Ausnehmung des Spritzgusswerkzeugs, und
- Figuren 10A bis 10D: verschiedene Ausführungsformen für einen mittels eines Druckumformprozesses geformten Grundkörper.
- Figur 11: Ausführungsform eines mittels eines Druckumformprozesses geformten Grundkörpers mit einem ersten Ausführungsbeispiel eines Anbauteils.
- Figur 12: Ausführungsform eines mittels eines Druckumformprozesses geformten Grundkörpers mit einem zweiten Ausführungsbeispiel eines Anbauteils.
- Figuren 13A bis 13D: eine Darstellung eines Druckumformprozesses an einem Anbauteil an einem Grundkörper.

Einander entsprechende Teile sind in allen Figuren mit den gleichen Bezugszeichen versehen.

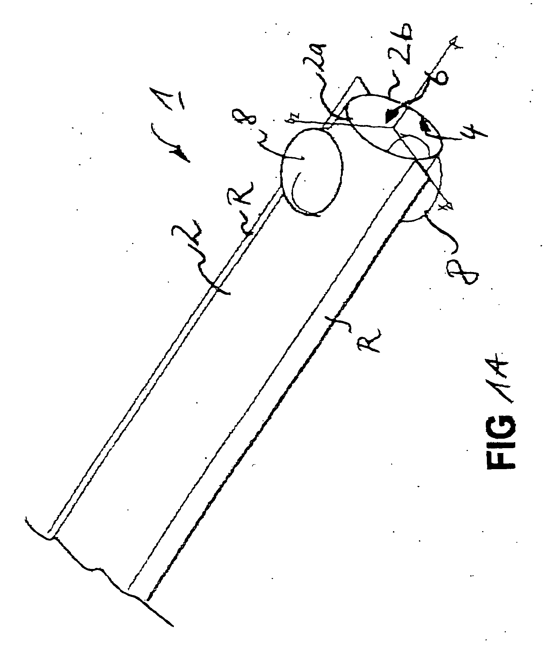

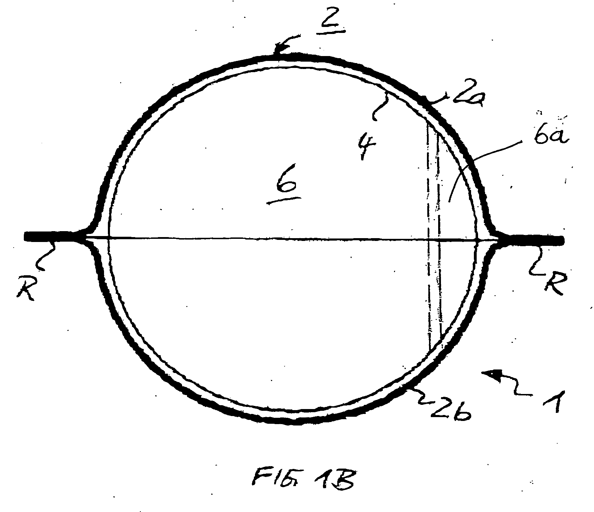

Figur 1A zeigt ein Bauteil 1, z.B. einen Querträger zum Anordnen zwischen nicht näher dargestellten A-Säulen eines nicht näher dargestellten Fahrzeugs. Figur 1B zeigt das Bauteil 1 im Querschnitt. Das Bauteil 1 dient beispielsweise als Instrumententafelträger für eine Klima- und/oder Heizungsanlage. Alternativ kann das Bauteil 1 als ein unter einer Windschutzscheibe angeordneter Querträger in einem Fahrzeug dienen, welcher als Luftführungskanal zur Klimatisierung des Fahrzeuginnenraums und zur Enteisung der Windschutz- oder Frontscheibe vorgesehen ist.

Das Bauteil 1 weist hierzu einen Grundkörper 2 auf, der bevorzugt aus Blech, insbesondere aus einem Leichtmetall-Blech, z.B. aus AluminiumBlech oder Feinstahl-Blech gebildet ist. Der Grundkörper 2 ist im Ausführungsbeispiel als Hohlprofil, insbesondere rohrartig ausgeführt. Alternativ kann der Grundkörper 2 auch als ein Hohlprofil mit einem vieleckigen Querschnitt ausgeführt sein (nicht näher dargestellt). Des Weiteren ist der Grundkörper 2 aus zwei Halbkörpern 2a und 2b, z.B. zwei Halbschalen, gebildet - einer Unterschale und einer Oberschale.

Der Grundkörper 2 ist innenseitig mit einer Kunststoffschicht 4 versehen, der einen Kanal 6 bildet. Über die Kunststoffschicht 4 ist der Grundkörper 2, insbesondere dessen zwei Halbkörper 2a und 2b zusammengehalten, insbesondere wird die Kunststoffschicht 4 an den Grundkörper 2 gefügt. Zusätzlich kann der Grundkörper 2 mechanisch verbunden sein. Beispielsweise kann der Grundkörper 2 durch Verstemmen an den aneinander liegenden Rändern R der Halbkörper 2a, 2b genietet, geschraubt, geschweißt, geclincht oder in ähnlicher Weise verbunden sein.

Der mittels der Kunststoffschicht 4 gebildete Kanal 6 dient beispielsweise der Führung eines Mediums, insbesondere Luft zur Klimatisierung des Fahrzeuginnenraums. Alternativ kann der Kanal 6 auch der Führung von Leitungen oder Kabeln dienen, wobei zum Führen von Leitungen oder Kabeln beispielsweise eine oder mehrere gestrichelt dargestellte Kammern als Kabelkanal 6a von einem Medien führenden Teil des Kanals 6 abgetrennt werden. Der Grundkörper 2 ist mit mehreren in Längsrichtung gesehen in Abstand zueinander angeordneten Öffnungsbereichen 8 zum Ein- und/oder Austritt eines im Kanal 6 geführten Mediums, z.B. Luft, versehen.

Die Kunststoffschicht 4 dient unter anderem der Steifigkeit des Grundkörpers 2. Je nach Art und Funktion des Bauteils 1 kann der Grundkörper 2 für eine weitergehende Biege-, Beul- und Torsionssteifigkeit in nicht näher dargestellter Art und Weise mit einem Kunststoffkern, insbesondere mit einer Innenverrippung versehen sein. Der besonders dünnwandig ausgebildete Grundkörper 2 führt bei Durchströmen mit Luft zu einer Geräuschentwicklung, welche besonders vorteilhaft durch Auskleidung des Grundkörpers 2 mit der Kunststoffschicht 4 gedämpft wird. D.h. die Kunststoffschicht 4 übernimmt eine Schallisolierung und ggf. auch eine thermische Isolierung.

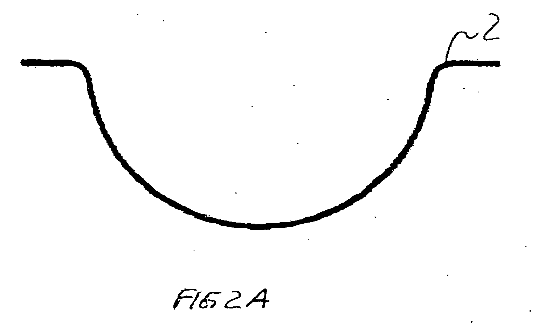

Figuren 2A und 2B zeigen die Schritte zum Herstellen des in den Figuren 1A und 1 B dargestellten Bauteils 1. Dabei wird als Träger für das Bauteil 1 der metallische Grundkörper 2 verwendet. Je nach Form des Bauteils 1 kann der Grundkörper 2 bereits vorgeformt sein. Alternativ wird der Grundkörper 2 in einer in Figur 2B gezeigten Vorrichtung V, insbesondere in einem Spritzgusswerkzeug 10 vorgeformt. Alternativ kann in nicht näher dargestellter Weise das Spritzgusswerkzeug auch mit offener Form ausgebildet sein, wobei entweder die Halbschalen oder Halbkörper 2a, 2b des Grundkörpers 2 mit Kunststoff ausgekleidet und nachträglich gefügt werden oder ein Kern zwischen den Halbkörpern 2a, 2b eingefügt wird. Je nach Art und Aufbau kann das Spritzgusswerkzeug 10 ein- oder mehrteilig ausgebildet sein. Vorliegend ist das Spritzgusswerkzeug 10 zweiteilig ausgeführt und umfasst ein Oberwerkzeug 10a und ein Unterwerkzeug 10b.

Im Fall, dass die Halbschalen nachträglich gefügt werden, wird der Grundkörper 2 zur Herstellung eines Bauteils 1 gemäß Figur 1A in eine Spritzgussform 12 des Spritzgusswerkzeugs 10 eingelegt. Durch zumindest teilweises oder vollständiges Schließen der Spritzgussform 12 wird der Grundkörper 2 entsprechend der Form oder Kontur der Spritzgussform 12 vorgeformt. Dabei kommt es bedingt durch die Festigkeit des metallischen Grundkörpers 2 zu Hohlräumen in Form von Spalten S zwischen der Kontur der Spritzgussform 12 und dem Grundkörper 2. Für ein möglichst leichtes Bauteil 1, welches zudem besonders einfach formbar ist, ist der metallische Grundkörper 2 bevorzugt aus einem Leichtmetall, insbesondere aus Aluminium oder aus Feinstahl, mit einer Wanddicke von 0,4 mm bis 1,5 mm gebildet. Bevorzugt wird der Grundkörper 2 mit bereichsweise variierender Wanddicke geformt, so dass an das Bauteil 1 abschnittsweise weitere Elemente, z.B. eine Lenkung, eine Klimaanlage, Luftein- und/oder Luftauslässe integriert werden können.

In einem anschließenden Verfahrensschritt wird Kunststoffschmelze in die Spritzgussform 12 eingeführt, so dass mittels des Einspritzdrucks der Grundkörper 2 mit der Kunststoffschicht 4 mit einer vorgegebenen Ausbildung entsprechend der Kontur der Spritzgussform 12 druckgeformt wird.

Der Kunststoff wird über mindestens einen Kanal K mit einem vorgegebenen Einspritzdruck p1 in die Spritzgussform 12 zur ein- oder beidseitigen und vollständig oder partiellen Beschichtung des Grundkörpers 2 beispielsweise in einem Spritzgussverfahren, insbesondere in einem Mehrkomponenten-Spritzgussverfahren bei beidseitig bzw. vollständig beschichteten Bauteil eingebracht. Alternativ und abhängig von der Art des Kunststoffs kann dieser auch eingeschäumt, eingegossen oder in ähnlicher Weise eingebracht sein.

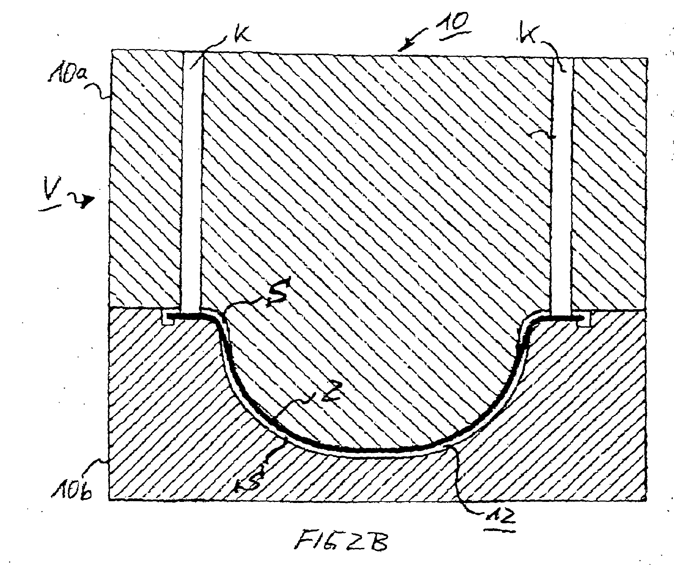

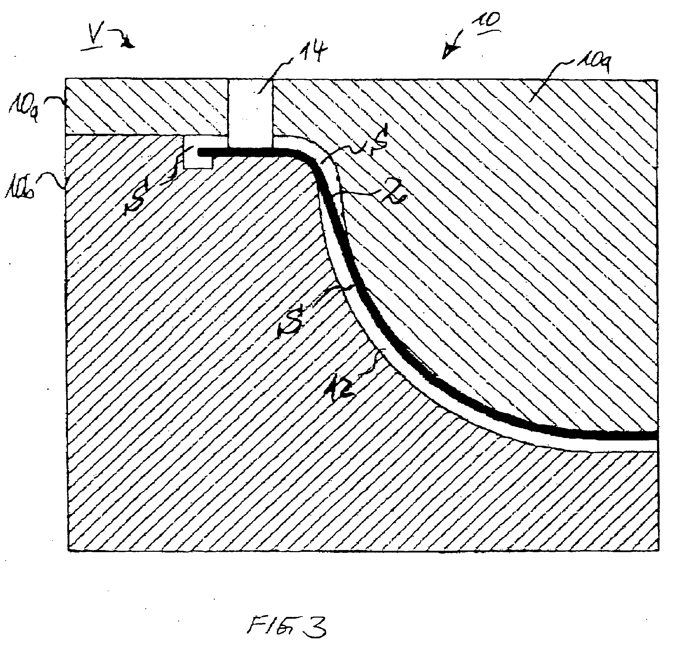

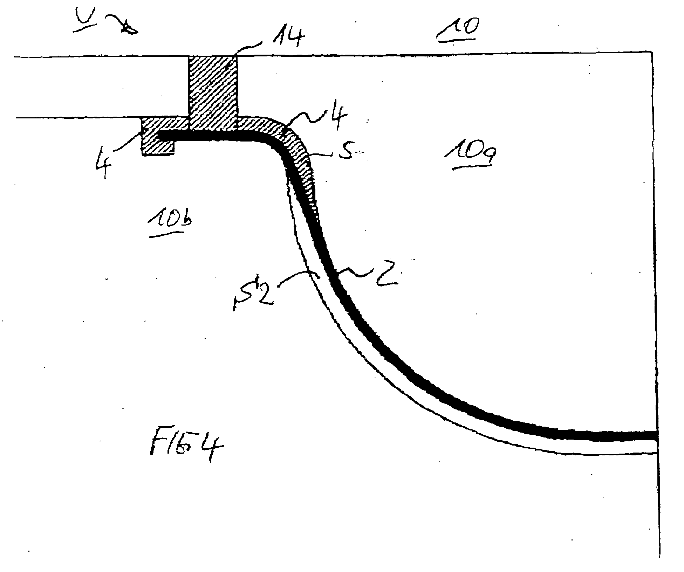

Figur 3 zeigt einen vergrößerten Ausschnitt des Spritzgusswerkzeugs 10 mit einer Erweiterung der Vorrichtung V um ein Form gebendes Werkzeugelement 14, z.B. ein Stempel. Das Werkzeugelement 14 kann einer weiteren Formgebung des Grundkörpers 2 dienen. Darüber hinaus dient es dem Niederhalten des Grundkörpers 2 während des Umformprozesses. Beim Kunststoffeinbringen werden, wie in Figur 4 gezeigt, die zwischen dem Grundkörper 2 und der Wandung des Spritzgusswerkzeug 10 gebildete Spalte S mit Kunststoff aufgefüllt, so dass der Grundkörper 2 zumindest partiell mit einer Kunststoffschicht 4 beschichtet, insbesondere umspritzt wird. Die Größe des Spalts S wird durch die gewünschte Dicke der Kunststoffschicht des Bauteils vorgegeben. Vorzugsweise beträgt der Spalt S mindestens 1 mm und höchstens 8 mm.

Je nach Ausgestaltung der Spritzgussform 12 und der Vorformung des Grundkörpers 2 kann dieser innen- und/oder außenseitig mit einer Kunststoffschicht 4 versehen werden. Darüber hinaus kann durch Einbringen von Kunststoff in mehreren Phasen dieser ein- oder mehrschichtig an den Grundkörper 2 angeformt werden.

In einer Nachdruckphase wird anschließend der Grundkörper 2 beispielsweise durch Eindrücken und/oder Durchdrücken der Spritzgussform 12 durch das Ober- oder Unterwerkzeug 10a bzw. 10b und/oder durch das Werkzeugelement 14 in eine vorgegebene Endausbildung druckgeformt. Hierdurch wird die Kunststoffschicht 4 nachhaltig besonders formschlüssig und flächig an den Grundkörper 2 angeformt.

Figur 4 zeigt eine teilweise mit Kunststoffschmelze gefüllte Form aus Figur 3, wobei die Kunststoffeinspritzung im dargestellten Ausführungsbeispiel vom Rand her erfolgt. Der freie Spalt S ist soweit gefüllt, dass die Schmelze am Blechteil 2 anliegt und nun beginnt dieses zu verformen, indem es das Blechteil 2 in Richtung des noch freien Spaltes S2 auf der von der Schmelze abgewandten Seite drückt.

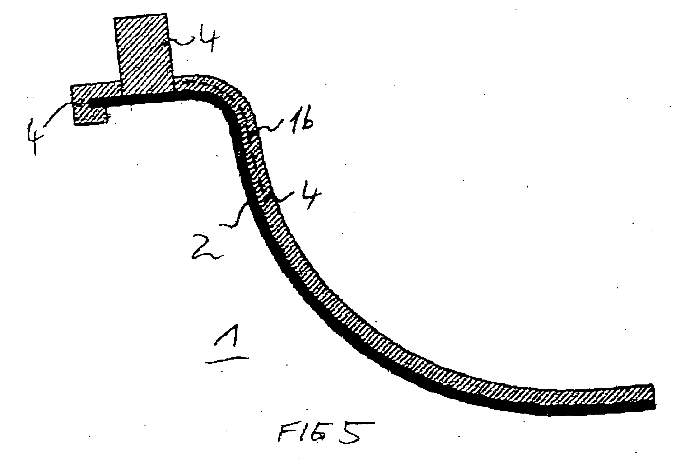

In Figur 5 ist eine Hälfte einer Schale des fertig gestellten Bauteils 1 dargestellt. Dabei ist der Grundkörper 2 partiell mit einer Kunststoffschicht 4 versehen. Zusätzlich kann die Kunststoffschicht 4 mit einer Verstärkung 16, insbesondere mit einem Verstärkungsgewebe, z.B. einem Glasfasergewebe, versehen sein. Die Kunststoffschicht 4 weist je nach Vorgabe eine Dicke von 0,8 mm bis 10 mm auf, vorzugsweise zwischen 1,0 mm und 8 mm auf.

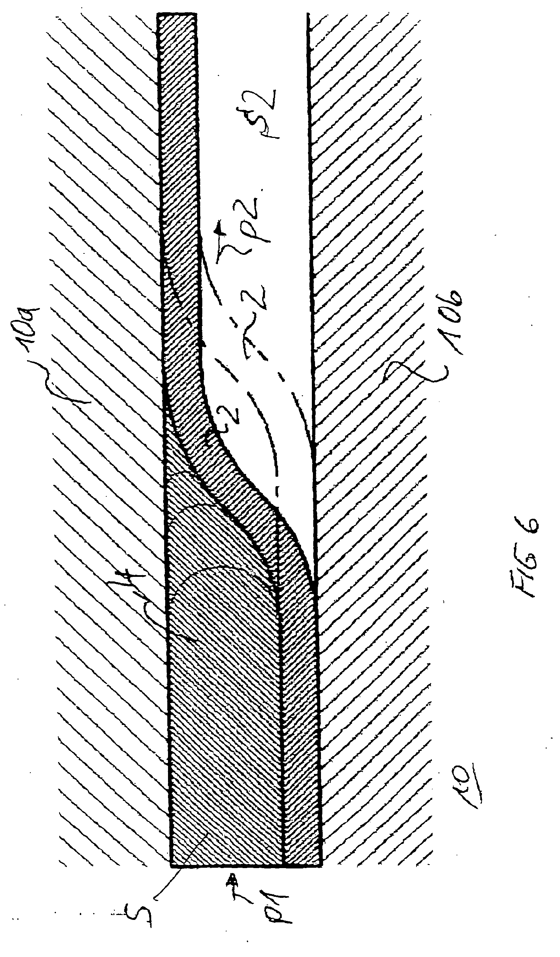

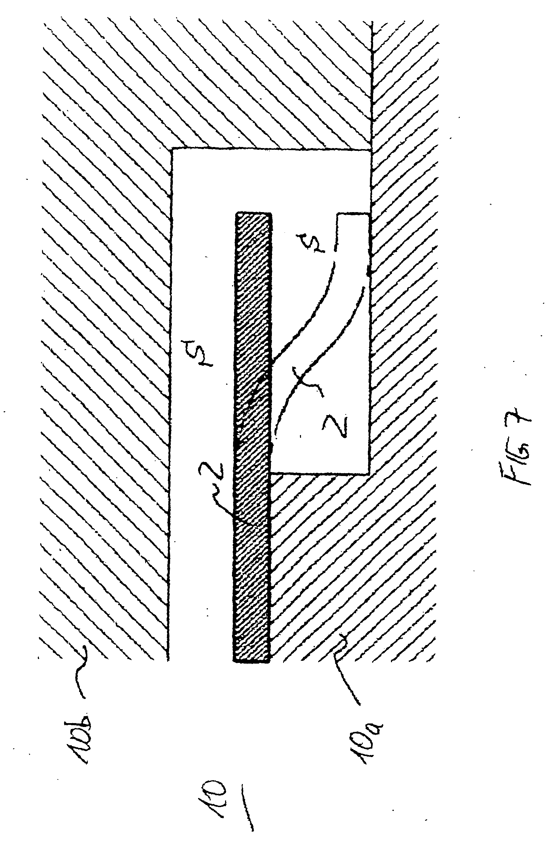

Figuren 6 und 7 zeigen eine Darstellung des Druckumformprozesses des Grundkörpers 2 bei gleichzeitiger Anformung der Kunststoffschicht 4. Dabei wird der Kunststoff mit einem Einspritzdruck p1, z.B. von 600 bis 1500 bar, bevorzugt von ca. 800 bar bis 1000 bar, in die Spalte S eingespritzt. Die Spalte S ist dabei zwischen dem Oberwerkzeug 10a und der Oberseite des Grundkörpers 2 gebildet. Zwischen der Unterseite des Grundkörpers 2 und dem Unterwerkzeug 10b ist eine weitere Spalte S2, insbesondere eine Luftspalte gebildet, in die kein Kunststoff eingeführt wird. Mit zunehmender Verkleinerung des Hohlraums und der Spalte S auf der Oberseite des Grundkörpers 2 wird dieser in den Luftspalt S2 gedrückt und entsprechend geformt. Im Luftspalt S2 herrscht ein Luftdruck p2 von 1 bar, bzw. die Luft kann durch entsprechende Entlüftungen, Auswerfer oder Werkzeugtrennungen entweichen. Figur 7 zeigt die Umformung des Grundkörpers 2 an einer Kante des Spritzgusswerkzeugs 10.

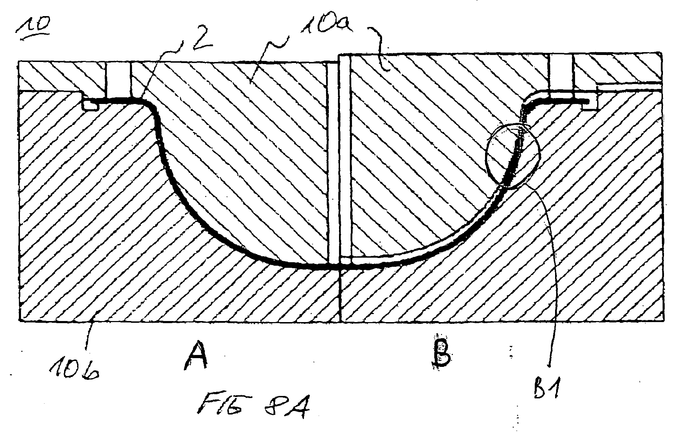

Figuren 8A bis 8C zeigen eine Darstellung eines Druckumformprozesses des Grundkörpers 2 mit einem mehrteiligem Spritzgusswerkzeug 10, insbesondere mit einem ebenfalls mehrteiligen Oberwerkzeug 10a und dem Unterwerkzeug 10b, bei dem die Einspritzung der Kunststoffschmelze von der Mitte aus erfolgt. In den Fig. 8A bis 8C sind zur Verdeutlichung des Drucckumformprozesses jeweils zwei verschiedene Arbeitspunkte für das Spritzgusswerkzeug 10 dargestellt, wobei jeweils die linke Seite A, C der jeweiligen Figur einen ersten Arbeitspunkt und die rechte Seite B, D der jeweiligen Figur einen zweiten Arbeitspunkt des Spritzgusswerkzeugs 10 darstellt. Fig. 8A zeigt beispielhaft die Folgen, wenn das Oberwerkzeug 10a und das Unterwerkzeug 10b nicht aufeinander abgestimmt sind, um auch bei nahezu senkrechten Bereichen einen genügend breiten Spalt zu erzeugen. Auf der linken Seite A der Fig. 8A befindet sich das Oberwerkzeug 10a im unteren Totpunkt UT, wodurch der im Spritzgusswerkzeug 10 eingelegte Grundkörper 2 partiell vorgeformt wird. Auf der rechten Seite B der Fig. 8A befindet sich das Oberwerkzeug 10a in der Einspritzposition. Wie aus der rechten Seite B der Fig. 8A ersichtlich ist, hat sich im nahezu senkrechten Bereich B1 nach der Vorformung des Grundkörpers ein zu schmaler Spalt gebildet, der nach dem Einspritzen eine zu geringe Kunststoffstärke in diesem Bereich B1 zur Folge hat.

Bei der Darstellung nach Fig. 8B sind das Oberwerkzeug 10a und das Unterwerkzeug 10b so aufeinander abgestimmt, dass sich bei dem auf der linken Seite A dargestellten Arbeitspunkt des Spritzgusswerkzeugs 10, bei dem sich das Oberwerkzeug 10a im unteren Totpunkt befindet, bei der Vorformung des Grundkörpers 2 ein genügend breiter Spalt bildet. Die rechte Seite B der Fig. 8B zeigt einen weiteren Arbeitspunkt des Spritzgusswerkzeugs 10, bei dem die Elemente des Oberwerkzeugs 10a in einer Einspritzposition für die Kunststoffschmelze gebracht sind. Insbesondere werden die einzelnen Elemente nach der Vorformung des Grundkörpers 2 unter Bildung eines Einspritzkanals 18, der bevorzugt in der Werkzeugsymmetriemitte angeordnet ist, in die Einspritzposition gebracht. In der Einspritzposition wird dann, wie aus der linken Seite C der Fig. 8C ersichtlich ist, die Kunststoffschmelze bevorzugt mittig über den Einspritzkanal 18 eingeführt, so dass der Grundkörper 2 abschließend geformt und mit der Kunststoffschicht 4 versehen wird. Dabei erfolgt das Einspritzen der Kunststoffschmelze bevorzugt mittig über den Einspritzkanal 18 in das Spritzgusswerkzeug 10. Ein derartiges Formfüllen von der Werkzeugmitte aus bewirkt, dass Lufteinschlüsse vermieden werden und ggf. Bindenähte am Formenrand und nicht in der Formenmitte liegen. Die rechte Seite D der Fig. 8C zeigt die vollständig gefüllte Form nach dem Einspritzvorgang. Die einzelnen Elemente des Oberwerkzeugs 10a können nun, wie durch einen Pfeil D1 angedeutet wird, nochmals geringfügig in Richtung unterer Totpunkt zum Ausgleich von Schwindung und zur Erhöhung der Druckkräfte im Spritzgusswerkzeug 10 für eine möglichst konturgenaue Ausbildung der Formen des Grundkörpers 2 mit der Kunststoffschicht 4 vorgefahren werden.

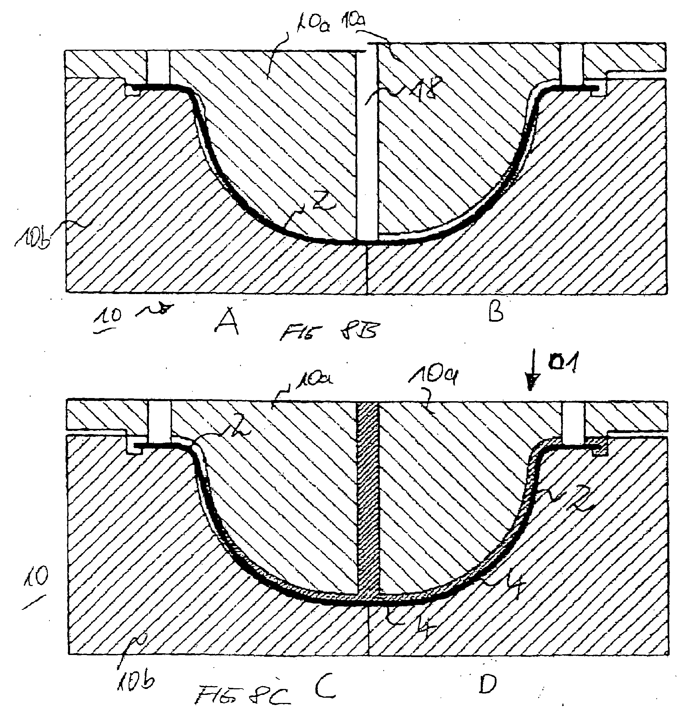

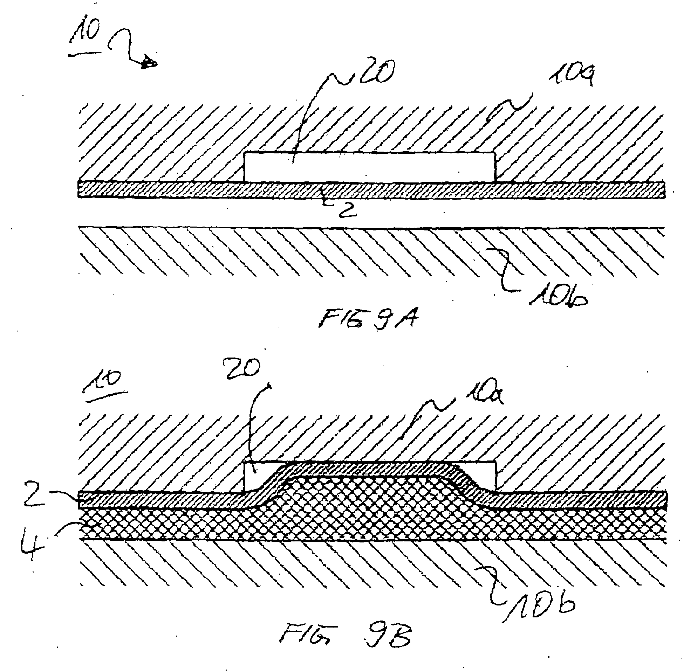

Figuren 9A, 9B zeigen eine Darstellung eines Druckumformprozesses des Grundkörpers 2 an einer Ausnehmung oder Sicke 20 des Spritzgusswerkzeugs 10. Durch ein derartig mit Sicken 20 versehenes Spritzgusswerkzeug 10 können Formkosten und Umformstufen reduziert werden. Ein derart mit einer "Beule" geformter Grundkörper 2 ermöglicht eine besonders gute Formsteifigkeit und Formstruktur, so dass bei einem dünnwandigen Grundkörper 2 dieser durch eine entsprechend geformte Oberfläche eine hinreichend gute Form- und Beulfestigkeit gegeben ist. In den Figuren 10A, B bzw. 10C, D sind zwei verschiedene Ausführungsformen für einen mittels eines Druckumformprozesses geformten Grundkörper 2. Die Fig. 10A und 10C zeigen dabei den Grundkörper 2 vor dem Umformprozess entlang einer Kontur des Oberwerkzeugs 10a und die Fig. 10B und 10D zeigen den Grundkörper 2, welcher durch den Kunststoff 4 in die Werkzeugtextur gepresst wurde. Dabei weist das Oberwerkzeug 10a verschiedene Formen für Sicken 20 - Figur 10A Spitzdachform und Figur 10C Runddachform - auf. Durch Einspritzen der Kunststoffschmelze wird der Grundkörper 2 in die Sicken 20 gedrückt und durch Spritzdruck geformt sowie mit der Kunststoffschicht 4 versehen. Je nach Form, Art und Anzahl der Sicken 20 des Spritzgusswerkzeugs 10 im Ober- und/oder Unterwerkzeug 10a bzw. 10b können beliebige Formen und Muster, z.B. Längsrillen, Querrillen, Kreuzmuster oder hexagonale Muster, als Oberflächenstruktur für den mit der Kunststoffschicht 4 versehenen Grundkörper 2 realisiert werden.

Sollen Bereiche umgeformt werden, an welchen im Endprodukt kein Kunststoffüberzug vorhanden ist, ergeben sich folgende Möglichkeiten. Der Umformbereich kann mittels eines aus der Zwei-Komponenten-Technik bekannten Trennschiebers vom Rest der Kavität abgetrennt werden. In diesen Bereich wird dann über eine eigene Anspritzstelle der gleiche Kunststoff oder ein anderes Polymer eingespritzt. Aus diesem abgeteilten Bereich kann später der Kunststoff leicht wieder entfernt werden. Alternativ kann in diesen Bereich auch ein anderes Material eingepresst werden, über welches der entsprechende Umformdruck aufgebracht wird. Als Medien eigenen sich vor allem Medien die elastisch bleiben oder Ihren Aggregatzustand beibehalten wie Polymere, Flüssigkeiten, Pulver, feinkörnige Substanzen, Hochviskose Medien, etc. oder Elastomereinlagen. In diesem Fall lassen sich auch "Hinterschnitte" einformen, welche vor der Entnahme durch Schieber von der Gegenseite entformbar gemacht werden. Im einfachsten Fall wird dieser Bereich vor dem Einspritzen des Polymers mit einem Stempel umgeformt.

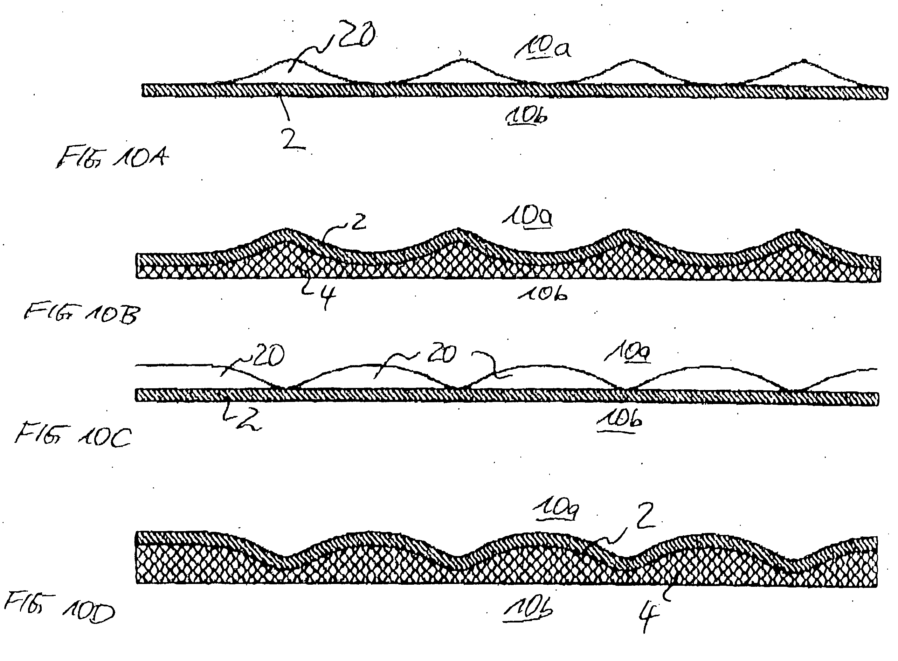

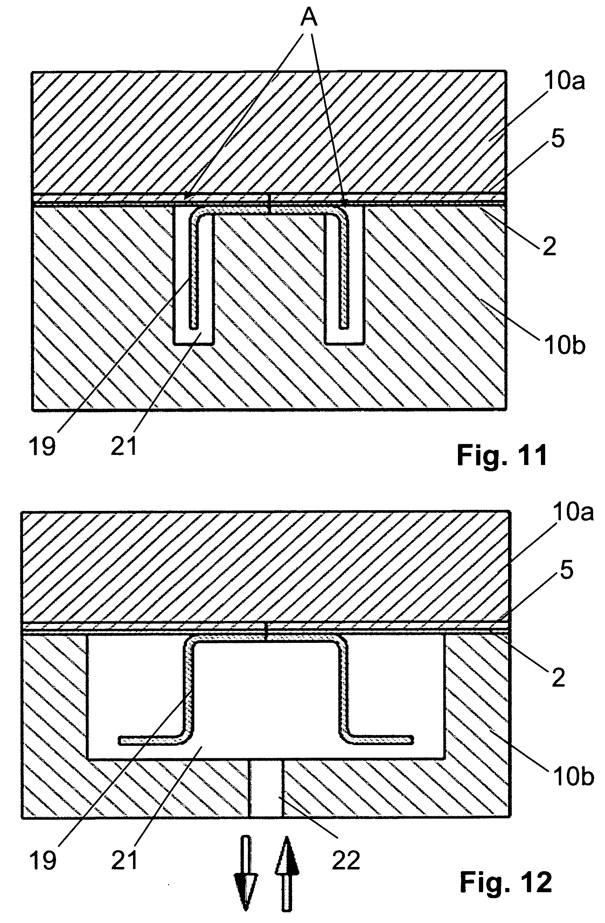

Ausführungsbeispiele mit Anbauteilen 19 am Grundkörper 2, welche nicht von der Kunststoffschicht 5 umgeben werden, sind in den Figuren 11 und 12 dargestellt. Diese Anbauteile können vor dem Umformprozess am Grundkörper angebracht, beispielsweise verschweißt werden. Im Unterwerkzeug 10b sind Aussparungen für jeweils einen Füllraum 21 an den abstehenden Enden des Anbauteils 19, beispielsweise ein Halter, vorgesehen. Die Aussparungen sind so groß bemessen, dass diese, Toleranzen hinsichtlich der Anordnung des Anbauteils 19 am Grundkörper 2 ausgleichen können. In den Füllraum 21 wird vor dem Spritzgießvorgang ein Medium eingebracht mit einem dem Spritzdruck, beispielsweise 600 bis 1600 bar, entgegenwirkenden Druck, vorzugsweise 1 bis 10 bar. Der geringe Gegendruck reicht aus, da die eingebrachten Medien weitest gehend inkompressibel sind. Der Vordruck sorgt für eine ausreichende Füllung. Dieser Vorgang kann ggf. durch aufgebrachte Schwingungen (Rütteln, Vibrationen) beim Befüllen mit Partikeln unterstützt werden. Bei Bedarf und zur Abdichtung bzw. um ein Verschleppen der Medien in das Werkzeug zu verhindern, können die Medien innerhalb einer Membrane eingebracht werden. Ist nach Einbringen des Mediums die Befüllöffnung geschlossen, es ergibt sich im Wirkraum des Mediums ein entsprechender Gegendruck zum Spritzdruck und Nachdruck. Dadurch wird ein Ausbeulen des Grundkörpers 2, durch den Spritzdruck in den mit A bezeichneten Bereichen weitgehend verhindert. Als Medien zum Befüllen des Füllraums 21 eigenen sich vor allem Medien die elastisch bleiben, nur wenig kompressibel sind oder Ihren Aggregatzustand beibehalten wie Polymere, Flüssigkeiten, Pulver, feinkörnige Substanzen, Hochviskose Medien, etc. oder Elastomereinlagen. Die Anbauteile 19 in den Figuren sind jeweils mit dem gleichen Bezugszeichen versehen, auch wenn diese nicht baugleich ausgeführt sind. Fig. 12 zeigt ein weiteres Anbauteil 19 mit gekröpften Enden. Im Unterwerkzeug 10b ist zusätzlich die Füllöffnung 22 dargestellt, die zum Befüllen beziehungsweise zum Entleeren des Füllraums dient. Das Befüllen und Entleeren kann auch über mehrere verschiedene Öffnungen erfolgen. Die dargestellten Formen der Anbauteile 19 sind nur beispielhaft zu verstehen. Weitere beliebige Formen sind ohne aufwändige Umbauten der Vorrichtung möglich.

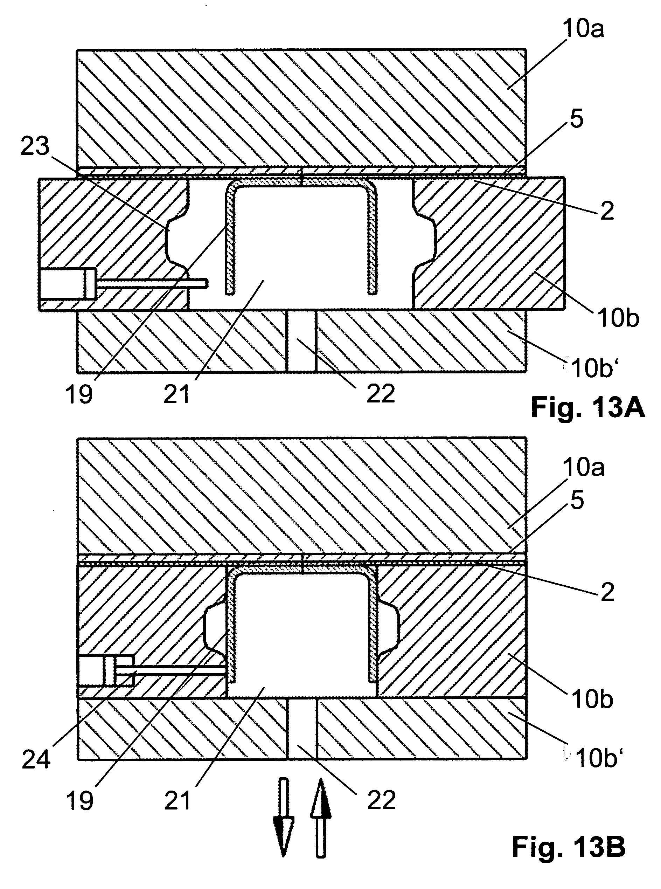

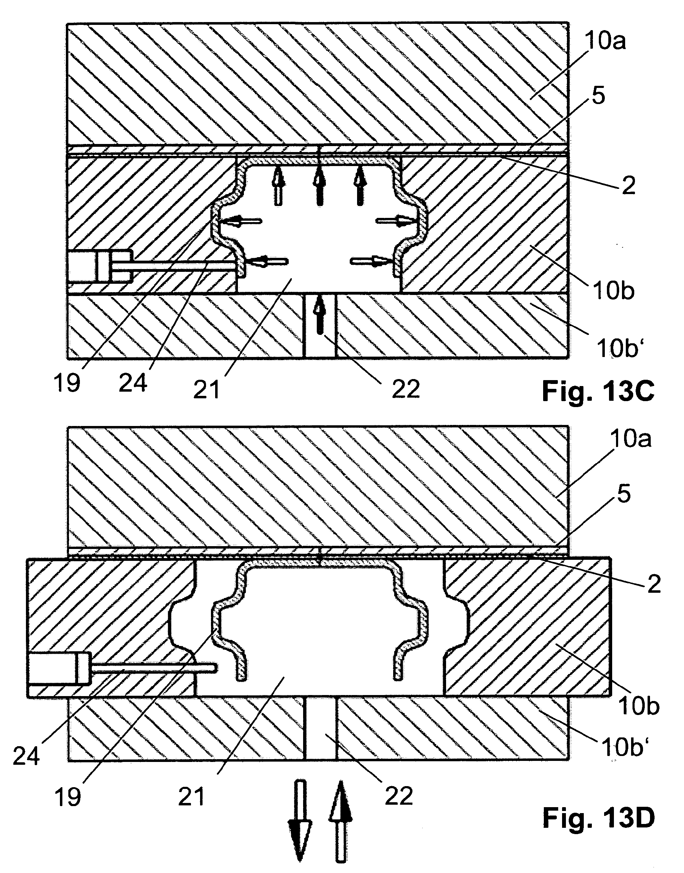

Zusätzlich kann auch ein Anbauteil 19 mit Hinterschnitt ausgebildet sein und mittels eines zusätzlichen Werkzeugs und des unter Druck eingebrachten Füllmediums in seine endgültige Form gebracht werden. Ein beispielhafter Umformprozess ist in den Figuren 13A bis 13D dargestellt. Ein Anbauteil 19 wird dabei von einem geteilten Unterwerkzeug 10b, das Ausnehmungen 23 zur Formgebung des Anbauteils aufweist, wie in Fig. 13A dargestellt, umschlossen. Nach Zusammenfahren der Unterwerkzeuge 10b, bis zu einem Endanschlag (als Beispiel hierfür ist symbolisch in Fig. 13B ein taktiler Sensor 24 dargestellt) wird über eine Füllöffnung 22 eines weiteren Unterwerkzeugs 10b', das entsprechende Füllmedium unter Druck eingebracht, so dass das Anbauteil entsprechend umgeformt wird, wie in Fig. 13C dargestellt. Fig. 13D zeigt das geformte Anbauteil 19 nach dem Auseinander fahren der Unterwerkzeuge 10b.

## Patentansprüche

1. Verfahren zur Herstellung eines einen zumindest teilweise kunststoffbeschichteten Grundkörper (2) umfassenden Bauteils (1), insbesondere eines Hybridbauteils für einen Querträger eines Fahrzeugs oder eines Front-End-Bauteils, bei dem der Grundkörper (2) in eine Spritzgussform (12) eingelegt und zumindest teilweise oder vollständig durch Schließen der Spritzgussform (12) vorgeformt sowie anschließend in einem einzigen Verfahrensschritt beim Kunststoffeinbringen mittels des Einspritzdrucks (p1) und/oder eines Werkzeugelements, und/oder einer Schließeinheit mit einer vorgegebenen Ausbildung druckgeformt wird.

2. Verfahren nach Anspruch 1, bei dem der Grundkörper (2) in der Spritzgussform (12) durch Einführen mindestens eines Form gebenden Werkzeugelements (14), wie z.B. eines Stempels, vorgeformt wird.

3. Verfahren nach Anspruch 1 oder 2, bei dem der Grundkörper (2) durch Eindrücken und/oder Durchdrücken der Spritzgussform (12) in eine vorgegebene Endausbildung druckgeformt wird.

4. Verfahren nach einem der Ansprüche 1 bis 3, bei dem der Grundkörper (2) zumindest partiell vom Kunststoff beschichtet, insbesondere umspritzt wird.

5. Verfahren nach einem der Ansprüche 1 bis 4, bei dem der Grundkörper (2) innen- und/oder außenseitig mit Kunststoff versehen wird.

6. Verfahren nach einem der Ansprüche 1 bis 5, bei dem der Kunststoff ein- oder mehrschichtig aufgebracht wird.

7. Verfahren nach einem der Ansprüche 1 bis 6, bei dem der Kunststoff formschlüssig und flächig aufgebracht wird.

8. Verfahren nach einem der Ansprüche 1 bis 7, bei dem eine Kunststoffschicht (4) mit einer Verstärkung (16), insbesondere mit einem Verstärkungsgewebe, z.B. Fasem oder einem Glasfasergewebe, versehen wird.

9. Verfahren nach einem der Ansprüche 1 bis 8, bei dem der Grundkörper (2) mit einem Kunststoffkern, insbesondere mit einer Innenverrippung versehen wird.

10. Verfahren nach einem der Ansprüche 1 bis 9, bei dem der Kunststoff in einem Mehrkomponenten-Spritzgußverfahren eingebracht wird.

11. Verfahren nach einem der Ansprüche 1 bis 10, bei dem der Kunststoff mit einer Dicke von 1 mm bis 5 mm aufgebracht wird.

12. Verfahren nach einem der Ansprüche 1 bis 11, bei dem der Grundkörper (2) aus mehreren Elementen (2a, 2b) gebildet ist, die in der Spritzgussform (12) vorgeformt werden.

13. Verfahren nach Anspruch 12, bei dem die Elemente (2a, 2b) mechanisch, insbesondere durch Verstemmen, Druckfügen, Clinchen, oder Schweißen oder über die angeformten, insbesondere angespritzte Kunststoffschicht (4) miteinander verbunden werden.

14. Verfahren nach einem der Ansprüche 1 bis 13, bei dem ein aus einem Leichtmetall, insbesondere Aluminium oder Feinstahl gebildeter Grundkörper (2) mit einer Wanddicke von 0,4 mm bis 1,5 mm verwendet wird.

15. Verfahren nach einem der Ansprüche 1 bis 14, bei dem der Grundkörper (2) mit bereichsweise variierender Wanddicke geformt wird.

16. Verfahren nach einem der Ansprüche 1 bis 15, bei dem der Grundkörper (2) derart vorgeformt wird, dass ein Spalt (S) zwischen der formgebenden Seite der Spritzgussform (12) und der Außenform des Grundkörpers (2) gebildet ist.

17. Verfahren nach Anspruch 16, bei dem die Größe des Spalts (S) in Abhängigkeit vom Einspritzdruck (p1) und der Kunststoffschichtdicke vorgegeben wird.

18. Verfahren nach Anspruch 16 oder 17, bei dem der Spalt (S) mindestens 0,8 mm und höchstens 8 mm beträgt.

19. Vorrichtung (V) zur Herstellung eines einen zumindest teilweise kunststoffbeschichteten Grundkörper (2) umfassenden Bauteils (1), insbesondere eines Hybridbauteils für einen Querträger eines Fahrzeugs, umfassend ein Spritzgusswerkzeug (10) mit einer Spritzgussform (12), in welche der Grundkörper (2) anordbar und zumindest teilweise oder vollständig durch Schließen der Spritzgussform (12) vorformbar sowie anschließend in einem einzigen Verfahrensschritt beim Kunststoffeinbringen mittels des Einspritzdrucks (p1) mit einer vorgegebenen Ausbildung druckformbar ist.

20. Vorrichtung nach Anspruch 19, wobei die Spritzgussform (12) eine die Kontur des Grundkörpers (2) entsprechende Formgebende Seite, insbesondere Innenwand aufweist.

21. Vorrichtung nach Anspruch 19 oder 20, wobei die Spritzgussform (12) für ein ein- oder beidseitiges Beschichten des Grundkörpers (2) mit Kunststoff ausgebildet ist.

22. Vorrichtung nach einem der Ansprüche 19 bis 21, wobei das Spritzgusswerkzeug (10) ein- oder mehrteilig ausgebildet ist.

23. Vorrichtung nach Anspruch 22, wobei das Spritzgusswerkzeug (10) ein Ober- und/oder ein Unterwerkzeug (10a, 10b) umfasst.

24. Vorrichtung nach Anspruch 23, wobei das Ober- und/oder Unterwerkzeug (10a, 10b) ein- oder mehrteilig ausgebildet ist.

25. Vorrichtung nach einem der Ansprüche 19 bis 24, wobei das Spritzgusswerkzeug (10), insbesondere das Ober- und/oder Unterwerkzeug (10a, 10b) mit mindestens einer Sicke (20) versehen ist.

26. Vorrichtung nach einem der Ansprüche 1 bis 25, wobei das Spritzgusswerkzeug (10) Bereiche beinhaltet, welche von einer Seite mittels Schieber entformbar sind und auf der Gegenseite über ein Medium in den Hinterschnitt geformt werden, wobei als Medium Gase, Flüssigkeiten, Pulver, Granulate, körnige Substanzen, oder Elastomere einsetzbar sind, die in einen Teilbereich der Kavität eingebracht werden oder die sich in einer Membrane befinden.

27. Verwendung eines nach dem Verfahren nach einem der Ansprüche 1 bis 18 hergestellten Bauteils (1) als Instrumententafelträger in einem Fahrzeug, mit einem Kanal (6), insbesondere einem Luftführungskanal und/oder einem Kabelkanal.

28. Verwendung eines nach dem Verfahren nach einem der Ansprüche 1 bis 18 hergestellten Bauteils (1) als Träger oder als Querträger in einem Fahrzeug, insbesondere als Querträger zwischen den A-Säulen eines Fahrzeugs oder als ein Front-End-Bauteil bildet.
